# EUROPEAN PATENT SPECIFICATION

(11) **EP 4 417 502 B1**
(45) Date of publication and mention of the grant of the patent: **27.05.2026**
(21) Application number: 23183624.8
(22) Date of filing: 05.07.2023
(51) Int. Cl.: B62L 3/02, B62M 6/45

(54) **BRAKE OPERATING DEVICE AND BICYCLE COMPRISING A BRAKE OPERATING DEVICE**
BREMSBETÄTIGUNGSVORRICHTUNG UND FAHRRAD MIT EINER BREMSBETÄTIGUNGSVORRICHTUNG
DISPOSITIF DE COMMANDE DE FREIN ET BICYCLETTE ÉQUIPÉE D'UN DISPOSITIF DE COMMANDE DE FREIN

(30) Priority: 20.02.2023 KR 20230021986
(43) Date of publication of application: 21.08.2024
(73) Proprietor: HL Mando Corporation, Pyeongtaek-si, Gyeonggi-do 17962 (KR)
(72) Inventor: KU, Hyun, Yongin-si, Gyeonggi-do 16904 (KR); KIM, Youngsin, Anyang-si, Gyeonggi-do 14102 (KR); LEE, Seungkyung, Anyang-si, Gyeonggi-do 14021 (KR); HONG, Kyungho, Yongin-si, Gyeonggi-do 16823 (KR)
(74) Representative: BCKIP Part mbB

(56) References cited:
- EP-A1- 3 632 756
- EP-A2- 2 236 373
- EP-B1- 2 488 397
- WO-A2-2011/026843

## Description

### TECHNICAL FIELD

The present invention relates to a brake operating device and a bicycle including the same, and more particularly, to a brake operating device used for a bicycle in which a motor operates or drives a wheel or performs regenerative braking, and a bicycle including the same.

### BACKGROUND

In general, bicycles are means of short-distance transportation. Recently, bicycles have been widely used for hobbies or exercise for health purposes. Recently, electric bicycles with electric modules have become popular to allow users to use driving power of motors to operate the bicycles to travel longer distances or reduce the user's physical exertion.

The electric bicycle with the electric module in the related art is configured by mounting the electric module including a battery and a motor on the bicycle that may be moved only manually. The electric bicycle is configured to assist in operating the bicycle by using power of the motor while detecting rotations of pedals when a rider rotates the pedals. To this end, the electric module for a bicycle may not only include the motor and the battery but also further include a speed reducer configured to reduce a rotational force of the motor, a power transmission device configured to transmit the rotational force, which is output from the speed reducer, to a wheel, and a control device configured to control the speed reducer and the power transmission device.

In addition, in the case of the electric module for a bicycle, the user may manipulate and control a rotational force of the motor by means of a control device. However, to precisely control the operation of the motor by detecting the user's pedal effort when the bicycle travels on a slope such as an upward slope or a downward slope, the electric module may further include a speed sensor installed to detect a rotational speed of the pedal or include a torque sensor installed in the motor.

In addition, the electric modules for a bicycle may be classified into a PAS (pedal assist system) type electric module and a throttle type electric module depending on traveling types.

The PAS-type electric module has a sensor provided on the pedal or the like. When the user presses the pedal, the PAS type electric module detects that the pedal is pressed and operates the motor. Most of the PAS-type electric modules are designed to set steps from a lowpowered step to a high-powered step. The PAS type includes a speed sensor type that detects a rotation of the pedal and transmits power, and a torque sensor type that detects the pressure of the pedal and the rotation and rotational speed of the pedal. The speed sensor type is low in costs but causes heterogeneity in traveling properties. Compared thereto, the torque sensor type causes less heterogeneity of the bicycle's traveling properties because the torque sensor type recognizes the user's pedal torque.

The throttle-type electric module is provided in the form of a button or lever mounted on a handle bar. When the throttle-type electric module operates, the throttle-type electric module allows the bicycle to travel like a motorcycle without requiring the user to pedal on the bicycle.

The bicycle mounted with the electric module charges the battery by recovering energy by performing regenerative braking, that is, the motor is operated as an electric generator during a braking process so that the bicycle travels a longer distance by a single charge of the mounted battery.

However, the regenerative braking is not always performed each time the bicycle is braked. For example, the regenerative braking is not performed during the braking process in a situation such as a state in which the battery is completely charged.

However, when the user generates a braking force by pulling a brake lever equally when the regenerative braking is performed and when the regenerative braking is not performed, there occurs a difference in braking performance depending on whether the regenerative braking is performed on the motor, which causes a problem in that the user feels disharmony.

EP 2 236 373 A2 describes a regenerative braking device including a braking mechanism configured to apply a braking force to a wheel, a brake operation section configured to generate a brake operation amount, a brake operation amount transmission section configured to transmit the brake operation amount from the brake operation section to the braking mechanism, a brake operation force sensor configured to detect a brake operation force of the brake operation amount transmission section, a drive device configured to apply a drive force to the wheel, and apply, at an operation time of the brake operation section, a regenerative braking force according to the brake operation force detected by the brake operation force sensor to the wheel, and a reaction force generator configured to apply a brake operation reaction force in accordance with a regeneration amount from the drive device to the brake operation amount transmission section. WO 2011/026843 A2 discloses the features of the preambles of claims 1 and 5.

### SUMMARY

The present invention has been made in an effort to provide a brake operating device that minimizes disharmony felt by the user during a braking process, and a bicycle with the same.

To this end, the present invention provides a brake operating device in accordance with claim 1, a brake operating device in accordance with claim 5, and a bicycle in accordance with claim 9.

According to the present invention, a brake operating device, which is configured for being used in a bicycle in which a motor operates or drives a wheel or performs regenerative braking, includes: a main body part configured for being mounted on a handle; a lever part rotatably coupled to the main body part; a hydraulic cylinder part embedded in the main body part and configured to generate a braking force to be provided to a brake pad when the lever part rotates; a sensor part configured to detect a position of the lever part; and a reaction force adjustment part configured to adjust a reaction force applied to the lever part in a direction opposite to a rotation direction of the lever part when the lever part rotates.

The lever part and the hydraulic cylinder are coupled such that rotation of the lever part causes operation of the hydraulic cylinder to increase or decrease the braking force. When the lever part is rotated in a first or clamping rotation direction, increase of the braking force generated by the hydraulic cylinder part is caused. When the lever part is rotated in a second or release clamping direction, decrease of the braking force generated by the hydraulic cylinder part is caused.

The brake operating device according to a first aspect of the invention further includes: a reaction force elastic part configured to provide a reaction force to the lever part in the direction opposite to the rotation direction of the lever part when the lever part rotates in the first rotation direction. Further, the reaction force adjustment part is coupled to the main body part and adjusts the reaction force provided to the lever part by the reaction force elastic part.

In addition, the reaction force adjustment part includes: a support body configured to selectively support one end of the reaction force elastic part in response to a position movement; and a solenoid configured to move a position of the support body and determine whether to support the support body on the reaction force elastic part. That is, the support body is movable between a first position, in which it supports the end of the reaction force elastic part, and a second position, in which clears the end of the reaction force elastic part. The solenoid is configured to move the support body between the first position and the second position.

The main body part may have a reaction force elastic part accommodation hole for accommodating the reaction force elastic part, the solenoid of the reaction force adjustment part may be coupled to the main body part, and the support body of the reaction force adjustment part may selectively support one end of the reaction force elastic part while being inserted into the reaction force elastic part accommodation hole or separated from the reaction force elastic part accommodation hole in response to a position movement. In other words, the support body of the reaction force adjustment part, in the first position, is inserted into the reaction force elastic part accommodation hole, and, in the second position, is separated from the reaction force elastic part accommodation hole.

The reaction force elastic part may provide the reaction force to the lever part when the support body of the reaction force adjustment part is positioned in the first position and, thus, supports one end of the reaction force elastic part.

Further, the reaction force adjustment part may operate so that the support body supports one end of the reaction force elastic part when the motor performs the regenerative braking, and the reaction force adjustment part may operate so that the support body does not support one end of the reaction force elastic part when the motor does not perform the regenerative braking. In particular, the reaction force adjustment part may be configured to receive a first control signal, e.g., from a controller, indicating the motor performs the regenerative braking, and, in response to receiving the first control signal, may move the support body to or hold the support body in its first position to support the end of the reaction force elastic part. Further, the reaction force adjustment part may be configured to receive a second control signal, e.g., from a controller, indicating that motor does not perform the regenerative braking. In response to receiving the second control signal, the reaction force adjustment part may move the support body in or hold the support body in its second position so that the support body does not support the end of the reaction force elastic part.

According to a second aspect of the invention, the reaction force adjustment part includes: a support body configured to selectively press the lever part in response to a position movement; a spring configured to elastically press or tension the support body in a direction of the lever part; and a solenoid configured to move a position of the support body and adjust the reaction force applied to the lever part by the support body. Specifically, the solenoid is configured to move the support body between its first position and its second position, and adjust the reaction force applied to the lever part by the support body. The support body is movable between a first position, in which it applies a reaction force to the lever part, and a second position, in which it clears the lever part.

A reaction force adjustment part accommodation hole may be formed in the main body part, the solenoid of the reaction force adjustment part may be disposed in the reaction force adjustment part accommodation hole, and the support body of the reaction force adjustment part may move forward or rearward in a direction of the lever part, i.e., towards and away from the lever part, in response to a position movement.

Further, the reaction force adjustment part may operate so that the support body elastically presses the lever part when the motor performs the regenerative braking, and the reaction force adjustment part may operate so that the support body may not elastically press the lever part when the motor does not perform the regenerative braking. Hence, the reaction force adjustment part may be configured to move the support body in or hold the support body in its first position so that it applies a reaction force to the lever part in response to receiving a first control signal, e.g., from a controller, indicating that the motor performs the regenerative braking. On the other hand, reaction force adjustment part may be configured to move the support body in or hold the support body in its second position so that it does not apply a reaction force to the lever part in response to receiving a second control signal indicating that the motor does not perform the regenerative braking.

The sensor part may be a linear sensor, and the sensor part may be embedded in the main body part and disposed in a longitudinal direction of the hydraulic cylinder part.

According to the present invention, a bicycle includes: a wheel; a motor configured to operate the wheel or perform regenerative braking on the wheel; a battery configured to supply stored electrical energy to operate the motor or store electrical energy received from the motor during the regenerative braking; a brake pad configured to brake the wheel; a brake operating device configured to provide a braking force to the brake pad in accordance with a user's manipulation; and a control device which is in signal communication with the brake operating device and which is configured to adjust the braking force provided to the brake pad by the brake operating device on the basis of an operating state of the motor and a state of charge of the battery.

The brake operating device includes a brake operating device in accordance with the first aspect or the second aspect of the invention. Hence, the brake operating device includes: a main body part mounted on a handle; a lever part rotatably coupled to the main body part; a hydraulic cylinder part embedded in the main body part and configured to generate a braking force to be provided to a brake pad when the lever part rotates; a sensor part configured to detect a position of the lever part; and a reaction force adjustment part configured to adjust a reaction force applied to the lever part in a direction opposite to a rotation direction of the lever part when the lever part rotates.

The brake operating device further includes: a reaction force elastic part configured to provide a reaction force to the lever part in the direction opposite to the rotation direction of the lever part when the lever part rotates. Further, the reaction force adjustment part is coupled to the main body part and adjust the reaction force provided to the lever part by the reaction force elastic part.

The reaction force adjustment part includes: a support body configured to selectively support one end of the reaction force elastic part in response to a position movement; and a solenoid configured to move a position of the support body and determine whether to support the support body on the reaction force elastic part.

The main body part may have a reaction force elastic part accommodation hole for accommodating the reaction force elastic part, the solenoid of the reaction force adjustment part may be coupled to the main body part, and the support body of the reaction force adjustment part may selectively support one end of the reaction force elastic part while being inserted into the reaction force elastic part accommodation hole or separated from the reaction force elastic part accommodation hole in response to a position movement.

The reaction force elastic part may provide the reaction force to the lever part when the support body of the reaction force adjustment part supports one end of the reaction force elastic part.

Further, the control device may operate the reaction force adjustment part so that the support body supports one end of the reaction force elastic part when the motor performs the regenerative braking, the control device may operate the reaction force adjustment part so that the support body does not support one end of the reaction force elastic part when the motor does not perform the regenerative braking. That is, the control device may be configured to output the first control signal to the reaction force adjustment part to cause the reaction force adjustment part to position the support body in its first position, when the motor performs the regenerative braking. Likewise, the control device may be configured to output the second control signal to the reaction force adjustment part to cause the reaction force adjustment part to position the support body in its second position, when the motor does not perform the regenerative braking.

Further optionally, the control device may perform control so that the motor does not perform the regenerative braking when the battery is completely charged.

The reaction force adjustment part, in one alternative of the application, includes: a support body configured to selectively press the lever part in response to a position movement; a spring configured to elastically press the support body in a direction of the lever part; and a solenoid configured to move a position of the support body and adjust the reaction force applied to the lever part by the support body.

A reaction force adjustment part accommodation hole may be formed in the main body part. Further, the solenoid of the reaction force adjustment part may be disposed in the reaction force adjustment part accommodation hole, and the support body of the reaction force adjustment part may move forward or rearward in a direction of the lever part in response to a position movement.

The control device may operate the reaction force adjustment part so that the support body elastically presses the lever part when the motor performs the regenerative braking, the control device may operate the reaction force adjustment part so that the support body does not elastically press the lever part when the motor does not perform the regenerative braking, and the control device may perform control so that the motor does not perform the regenerative braking when the battery is completely charged. In other words, the control device may be configured to output the first control signal to the reaction force adjustment part to cause the reaction force adjustment part to position the support body in its first position when the motor performs the regenerative braking, and to output the second control signal to the reaction force adjustment part to cause the reaction force adjustment part to position the support body in its second position when the motor does not perform the regenerative braking.

The sensor part may be a linear sensor, and the sensor part may be embedded in the main body part and disposed in a longitudinal direction of the hydraulic cylinder part.

According to the present invention, the brake operating device may minimize disharmony felt by the user during the braking process.

In addition, according to the present invention, the bicycle may minimize disharmony felt by the user when the user manipulates the brake operating device during the regenerative braking.

The foregoing summary is illustrative only and is not intended to be in any way limiting. In addition to the illustrative aspects, embodiments, and features described above, further aspects, embodiments, and features will become apparent by reference to the drawings and the following detailed description.

### BRIEF DESCRIPTION OF THE DRAWINGS

FIG. 1 is a configuration view of a brake operating device and a bicycle with the same according to a first embodiment of the present invention.
FIGS. 2 to 4 are configuration views for respective operating states of the brake operating device and the bicycle with the same in FIG. 1.
FIG. 5 is a configuration view of a brake operating device and a bicycle with the same according to a second embodiment of the present invention.
FIG. 6 is a configuration view illustrating an interior of a reaction force adjustment part used for the brake operating device in FIG. 5.
FIGS. 7 and 8 are configuration views for respective operating states of the brake operating device and the bicycle with the same in FIG. 5.

### DETAILED DESCRIPTION

In the following detailed description, reference is made to the accompanying drawing, which forms a part hereof. The illustrative embodiments described in the detailed description, and drawings are not meant to be limiting.

In addition, the constituent elements having the same configurations in several embodiments will be assigned with the same reference numerals and representatively described in a first embodiment, and only the constituent elements, which are different from the constituent elements according to the first embodiment, will be described in a second embodiment.

It is noted that the drawings are schematic, and are not illustrated based on actual scales. Relative dimensions and proportions of parts illustrated in the drawings are exaggerated or reduced in size for the purpose of clarity and convenience in the drawings, and any dimension is just illustrative but not restrictive. The same reference numerals designate the same structures, elements or components illustrated in two or more drawings in order to exhibit similar characteristics.

The expressions "include," "provided with," "have" and the like used in the present specification should be understood as open-ended terms connoting the possibility of inclusion of other embodiments unless otherwise mentioned in a phrase or sentence including the expressions.

In addition, a singular expression can include the meanings of the plurality unless otherwise mentioned, and the same applies to a singular expression stated in the claims.

In addition, the terms "first," "second," and the like used in the present specification are used to identify a plurality of constituent elements from one another and are not intended to limit the order or importance of the relevant constituent elements.

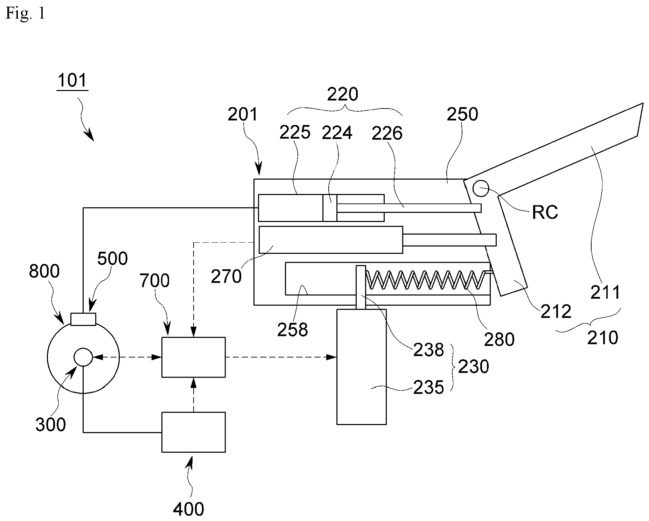

Hereinafter, a brake operating device 201 and a bicycle 101 with the same according to a first embodiment of the present invention will be described with reference to FIGS. 1 to 4. FIG. 1 conceptually illustrates main components of the bicycle 101 used in the first embodiment of the present invention.

In addition, the present invention may be applied to both a PAS (pedal assist system) type bicycle 101 and a throttle-type bicycle. The present invention may also be applied to a bicycle 101 having no chain. That is, the present invention may be applied to any bicycle as long as the bicycle 101 is mounted with an electric module in which a motor 300 operates a wheel 800 or performs regenerative braking.

As illustrated in FIG. 1, the bicycle 101 includes the wheel 800, the motor 300, a battery 400, a brake pad 500, a control device 700, and the brake operating device 101 .

The wheel 800 is used to drive the bicycle 101. That is, the bicycle 101 travels as the wheel 800 rolls. FIG. 1 illustrates a single wheel 800, but the bicycle 101 may typically have two wheels 800. However, the present invention is not limited thereto. The number of wheels 800 used for the bicycle 101 may vary depending on the type of bicycle 101 and the use of the bicycle.

The motor 300 may operate the wheel 800 or perform the regenerative braking on the wheel 800. That is, the motor 300 may be a motor 300 that also serves as an electric generator.

However, the invention is not limited thereto. The motor 300 for operating the wheel 800 and an electric generator (not illustrated) for the regenerative braking may be separately provided. That is, the present invention may be applied to both the case in which the bicycle 101 uses the motor 300 that also serves as the electric generator and the case in which the motor 300 and the electric generator (not illustrated) are separately used.

The battery 400 supplies stored electrical energy to the motor 300 to operate the motor 300 and stores electrical energy supplied from the motor 300 during the regenerative braking.

In addition, the battery 400 may transfer information on the current state of charge to a control device 700 to be described below. In particular, in the first embodiment, when the battery 400 is completely charged by external charging or completely charged by the continuous regenerative braking, the battery 400 transfers information on the state of charge to the control device 700 to be described below.

The brake pad 500 brakes the wheel 800 with physical friction by pressing the wheel 800. That is, in the first embodiment , the bicycle 101 may be braked by a braking force generated by the regenerative braking of the motor 300 and/or a braking force generated by the friction of the brake pad 500.

The brake operating device 201 provides the braking force to the brake pad 500 in response to manipulation by a user. That is, the brake operating device 201 provides hydraulic pressure to the brake pad 500 to generate the braking force in response to the user's manipulation. The brake pad 500 brakes the wheel 800 with the frictional force generated when the brake pad 500 presses the wheel 800 with the hydraulic pressure provided by the brake operating device 201.

Meanwhile, a detailed configuration of the brake operating device 201 will be described below.

The control device 700 may control the motor 300 to assist in driving the bicycle when the user rotates a pedal (not illustrated) of the bicycle 101. Further, when the control device 700 recognizes the user's braking intention from the brake operating device 201, the control device 700 may control the motor 300 and perform the regenerative braking. In this case, the user's braking intention may be recognized on the basis of a braking signal that is generated, in response to manipulation of the brake operating device 201, by a sensor part 270 of the brake operating device 201 to be described below and transmitted to the control device 700.

In addition, in the first embodiment , the control device 700 also adjusts a braking force, which is provided to the brake pad 500 by the brake operating device 201, on the basis of the operating state of the motor 300 and, optionally, the state of charge of the battery 400.

Hereinafter, the brake operating device 201 according to the first embodiment will be described in detail.

The brake operating device 201 includes a main body part 250, a lever part 210, a hydraulic cylinder part 220, the sensor part 270, a reaction force elastic part 280, and a reaction force adjustment part 230.

The main body part 250 is mounted on a handle of the bicycle 101. Further, the lever part 210 is rotatably coupled to the main body part 250. Specifically, the lever part 210 may include a handle part 211 extending in one direction from a rotation center RC and configured to be pulled by the user's hand, and a pressing part 212 extending from the rotation center RC in a different direction than the handle part 211. The pressing part 212 is connected to the hydraulic cylinder part 220, e.g., to a piston rod 226 of the hydraulic cylinder part 220 as shown in Fig. 1.

In addition, the main body part 250 may have a reaction force elastic part accommodation hole 258 that accommodates the reaction force elastic part 280 to be described below.

The hydraulic cylinder part 220 is embedded in the main body part 250. Further, when the lever part 210 rotates, the hydraulic cylinder part 220 generates a braking force to be provided to the brake pad 500.

Specifically, the hydraulic cylinder part 220 may include a cylinder main body 225, a piston 224 configured to generate the braking force to be provided to the brake pad 500 while reciprocating in the cylinder main body 225, and the piston rod 226 configured to connect the piston 224 and the pressing part 212 of the lever part 210.

Therefore, when the user grips and pulls the handle part 211 of the lever part 250 to perform the braking operation, the lever part 250 rotates in a first rotation direction, the pressing part 212 of the lever part 250 pushes the piston rod 226 of the hydraulic cylinder part 220 and presses the piston 224, and the hydraulic cylinder part 220 generates the braking force to be provided to the brake pad 500.

The sensor part 270 detects that the lever part 210 is rotated by the user, in particular, in the first rotation direction, and a position of the lever part 210 is changed. In response to detection rotation of the lever part 210, the sensor part 270 transmits the braking signal to the control device 700. That is, the control device 700 may recognize the user's braking intention by using the sensor part 270, in particular, based on the brake signal. Further, the sensor part 270 may also be embedded in the main body part 250 and disposed in the longitudinal direction of the hydraulic cylinder part 220.

As described above, when the user grips and pulls the lever part 210, the sensor part 270 may detect this operation, and the control device 700 may cause the motor 300 to perform regenerative braking on the basis of the braking signal transmitted by the sensor part 270. For example, the sensor part 270 may be a linear sensor and disposed in parallel with the hydraulic cylinder part 220.

When the lever part 210 rotates in the first rotation direction, the reaction force elastic part 280 provides a reaction force to the lever part 210 in a direction opposite to the first rotation direction of the lever part 210. Further, the reaction force elastic part 280 may also be embedded in the main body part 250. That is, the reaction force elastic part 280 may be accommodated in the reaction force elastic part accommodation hole 258 of the main body part 250. In this case, the reaction force means a force applied in a direction opposite to the direction in which the lever part 210 is rotated when the user pulls the handle part 211 of the lever part 210.

For example, the reaction force elastic part 280 may be a spring. According to the invention, one end of the reaction force elastic part 280 selectively moves freely or is supported by a support body 238 of the reaction force adjustment part 230 to be described below. The other end of the reaction force elastic part 280 may be connected to the pressing part 212 of the lever part 210.

When the user rotates the lever part 210 and starts the braking process, the control device 700 controls the motor 300 to perform the regenerative braking. Further, when the motor 300 performs the regenerative braking, a rotational speed of the wheel 800 decreases, and the braking force required for the brake pad 500 to brake the wheel 800 in response to the user's intention decreases to that extent.

In the first embodiment, the reaction force elastic part 280 provides the reaction force to the lever part 210 so that the braking force generated by the brake pad 500 is adjusted as the rotational speed of the wheel 800 is decreased by the regenerative braking.

The reaction force adjustment part 230 adjusts the reaction force applied to the lever part 210 in the direction opposite to the first rotation direction of the lever part 210 when the lever part 210 rotates in the first rotation direction. In particular, in the first embodiment, the reaction force adjustment part 230 may be coupled to the main body part 250 and adjust the reaction force applied to the lever part 210 by adjusting the reaction force provided to the lever part 210 by the reaction force elastic part 280.

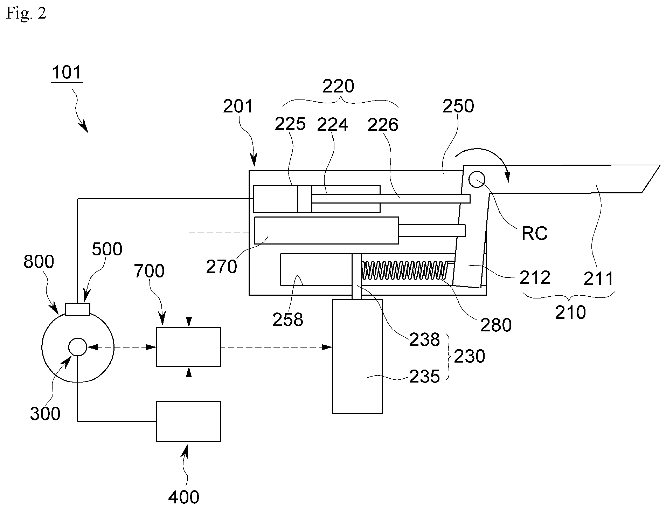

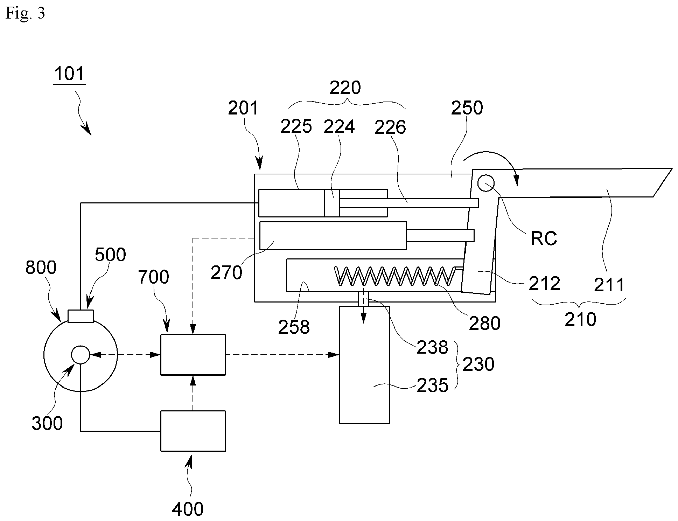

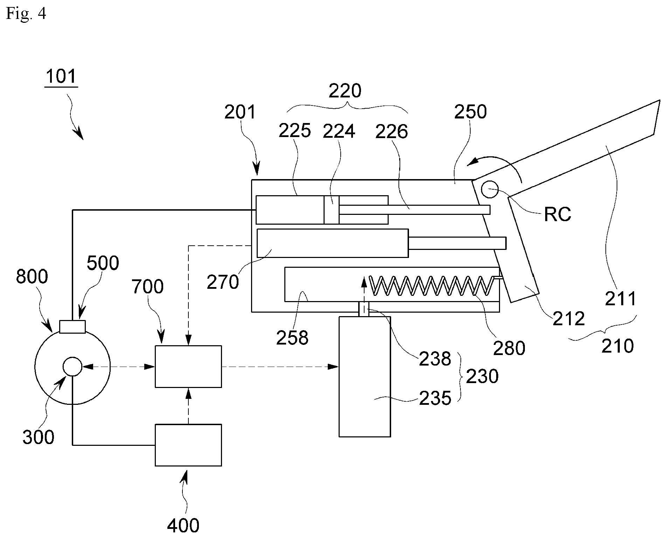

Specifically, the reaction force adjustment part 230 includes the support body 238 configured to selectively support one end of the reaction force elastic part 280 in response to a position movement. Specifically, the support body 238 is movable between a first position and a second position. In the first position, which is schematically shown in Figs. 1 and 2, the support body 238 supports the end of the reaction force elastic part 280. In the second position, which is shown in Figs. 3 and 4, the support body 238 is positioned away or distanced to and, thus, clears the end of the reaction force elastic part 280. The reaction force adjustment part 230 further includes a solenoid 235 configured to move the support body 238, in particular, between the first and the second position. Generally, the solenoid 235 is configured to determine whether to support the support body 238 on the reaction force elastic part 280 by moving the position of the support body 238. In this case, the solenoid 235 of the reaction force adjustment part 230 is coupled to the main body part 250. The support body 238 of the reaction force adjustment part 230, in its first position, supports one end of the reaction force elastic part 280 while being inserted into the reaction force elastic part accommodation hole 258 or, in its second position, is separated from the reaction force elastic part accommodation hole 258. That is, the solenoid 235 performs an electrical operation and reciprocates the support body 238 in a longitudinal direction to enable the support body 238 to selectively support one end of the reaction force elastic part 280. For example, the support body 238 may be a pin or another longitudinally extending body which, in a state in which the solenoid 235 is not supplied with a current, is positioned in the first position and support the end of the reaction force elastic body 238. For example, as stated above, the support body 238, in the first position, may protrudes into the reaction force elastic part accommodation hole 258. Upon supplying a current to the solenoid 235, the support body 238 is withdrawn or reciprocated from the end of the reaction force elastic body 238 to its second position, in which it may be moved out from the reaction force elastic part accommodation hole 258. In this case, a direction in which the support body 238 reciprocates is a direction intersecting a direction in which the reaction force elastic part 280 elastically presses the lever part 210.

In addition, an operation of the reaction force adjustment part 230 may be controlled by the control device 700. In case that the support body 238 of the reaction force adjustment part 230 supports one end of the reaction force elastic part 280 under the control of the control device 700, the reaction force elastic part 280 may provide the reaction force to the lever part 210. In contrast, when the support body 238 of the reaction force adjustment part 230 does not support one end of the reaction force elastic part 280, the reaction force elastic part 280 cannot provide the reaction force to the lever part 210.

When the motor 300 performs the regenerative braking, the control device 700 may output a first control signal to the reaction force adjustment part 230, e.g., to the solenoid 235, to control the reaction force adjustment part 230 so that the reaction force elastic part 280 provides the reaction force to the lever part 210. In particular, upon receiving the first control signal, the reaction force adjustment part 230 positions the support part 238 in its first position. For example, the solenoid 235, in response to the first control signal may be not supplied with electrical current. When the motor 300 does not perform the regenerative braking, the control device 700 may output a second control signal to the reaction force adjustment unit, e.g., to the solenoid 235, to control the reaction force adjustment part 230 so that the reaction force elastic part 280 does not provide the reaction force to the lever part 210. In particular, upon receiving the second control signal, the reaction force adjustment part 230 positions the support part 238 in its second position. For example, the solenoid 235, in response to the second control signal may be supplied with electrical current to withdraw the support part 238 from the reaction force elastic part 280.

In addition, when the battery 400 is completely charged, the control device 700 may perform control so that the motor 300 does not perform the regenerative braking.

Hereinafter, with reference to FIGS. 2 to 4, an operational principle of the brake operating device 101 according to the first embodiment of the present invention will be described in detail.

As illustrated in FIG. 2, when the user grips and pulls the handle part 211 of the lever part 210 to perform the braking process, the lever part 210 rotates in the first rotation direction about the rotation center RC, and the pressing part 212 of the lever part 210 presses the sensor part 270 and the piston rod 226 of the hydraulic cylinder part 220.

When the sensor part 270 detects the rotation of the lever part 210 and transmits the braking signal to the control device 700, the control device 700 controls the motor 300 to perform the regenerative braking. Further, when the regenerative braking is performed, the rotational speed of the wheel 800 decreases, and the braking force required for braking decreases to that extent.

As described above, when the motor 300 performs the regenerative braking, the reaction force elastic part 280 having one end supported by the support body 238 of the reaction force adjustment part 230 provides the reaction force to the lever part 210.

As a consequence, the user rotates the lever part 210 less than the original intention because of the reaction force applied to the lever part 210 by the reaction force elastic part 280. As the lever part 210 rotates less, the hydraulic cylinder part 220 provides the less generated braking force to the brake pad 500.

That is, the reaction force elastic part 280 provides the reaction force to the lever part 210 and induces the user's manipulation on the lever part 210 so that the braking force, which decreases to the extent that the rotational speed of the wheel 800 is decreased by the regenerative braking of the motor 300, is provided to the brake pad 500.

Next, as illustrated in FIG. 3, when the regenerative braking is not performed even though the user pulls the handle part 211 of the lever part 210, so that the braking signal generated and to perform the braking process, the reaction force applied to the lever part 210 by the reaction force elastic part 280 may be eliminated by the reaction force adjustment part 230.

That is, in case that the control device 700 controls the motor 300 to not perform the regenerative braking even though the control device 700 receives the braking signal from the sensor part 270 of the brake operating device 201, the reaction force adjustment part 230 may also be controlled so that the reaction force elastic part 280 does not provide the reaction force to the lever part 210.

For example, the case in which the control device 700 does not control the motor 300 to perform the regenerative braking even though the control device 700 receives the braking signal from the sensor part 270 of the brake operating device 201 may be a case in which the battery 400 is completely charged and need not be charged any further in the current state. In this situation, the motor 300 is controlled so as not to perform the regenerative braking even though the control device 700 receives the braking signal from the sensor part 270 of the brake operating device 201.

When the motor 300 does not perform the regenerative braking as described above, the rotational speed of the wheel 800 is not decreased by the regenerative braking. Therefore, to brake the wheel 800 in response to the user's intention, a relatively higher braking force is required than in the case in which the regenerative braking is performed.

Therefore, the control device 700 controls the reaction force adjustment part 230 to eliminate the reaction force applied to the lever part 210 by the reaction force elastic part 280, such that even though the user pulls the lever part 210 with the same force, a higher braking force may be provided to the brake pad 500 than in the case in which the regenerative braking is performed. As explained above, to eliminate the reaction force applied to the lever part 210 by the reaction force elastic part 280, the support part 238 may be moved from its first to its second position by the solenoid, e.g., in response to the second control signal received from the control device 700.

Meanwhile, unlike the first embodiment, if the same braking force is always applied to the brake pad 500 when the user pulls the lever part 210 with the same force regardless of whether to perform the regenerative braking, there occurs a difference in the operation of braking the bicycle 101 actually performed depending on whether to perform the regenerative braking, such that the user feels disharmony at the time of manipulating the brake operating device 201 to perform the braking process.

As described above, to prevent the user from feeling disharmony at the time of manipulating the brake operating device 201 to perform the braking process, the control device 700 of the first embodiment of the present invention may control the reaction force adjustment part 230 to adjust the reaction force provided to the lever part 210 by the reaction force elastic part 280.

That is, in case that the motor 300 does not perform the regenerative braking, the control device 700 may control the reaction force adjustment part 230 to eliminate or reduce the reaction force applied to the lever part 210 by the reaction force elastic part 280.

On the contrary, in case that the motor 300 performs the regenerative braking, the control device 700 may control the reaction force adjustment part 230 so that the reaction force elastic part 280 provides the reaction force to the lever part 210.

As described above, when the reaction force applied to the lever part 210 is eliminated or reduced in accordance with whether the motor 300 performs the regenerative braking, it is possible to minimize disharmony felt by the user in accordance with whether to perform the regenerative braking when the user manipulates the lever part 210 of the brake operating device 201.

Next, as illustrated in FIG. 4, when the user does not pull the lever part 210 of the brake operating device 201 any further, i.e., when the braking of the bicycle is stopped, the lever part 210 returns to the original position, and the solenoid 235 of the reaction force adjustment part 230 returns the support body 238 to the original or first position at which the reaction force elastic part 280 is supported.

With the above-mentioned configuration, the brake operating device 201 according to the first embodiment of the present invention may minimize disharmony felt by the user during the braking process.

In addition, the bicycle 101 having the brake operating device 201 according to the first embodiment of the present invention may minimize disharmony felt by the user when the user manipulates the brake operating device 201 in response to whether to perform the regenerative braking.

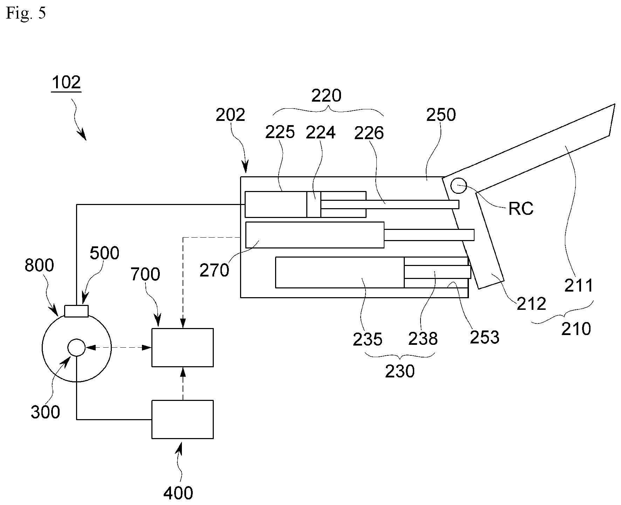

Hereinafter, a brake operating device 202 and a bicycle 102 with the same according to a second embodiment of the present invention will be described with reference to FIGS. 5 to 8.

The brake operating device 202 according to the second embodiment is identical to that in the first embodiment, except that the reaction force elastic part 280 in the first embodiment is excluded, and the arrangement and installation structure of the reaction force adjustment part 230 are changed.

That is, the brake operating device 202 according to the second embodiment may exclude the reaction force elastic part 280 to simplify the overall configuration, and the reaction force adjustment part 230 may control the reaction force applied directly to the lever part 210.

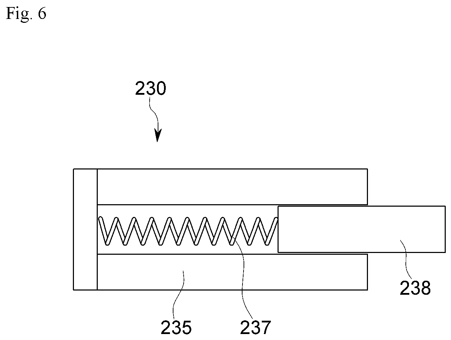

Specifically, as illustrated in FIGS. 5 and 6, the reaction force adjustment part 230 used for the brake operating device 202 according to the second embodiment of the present invention includes the support body 238 configured to selectively apply a reaction force to the lever part 210 depending on its position, a spring 237 configured to elastically press or tension the support body 238 in the direction of the lever part 210, and the solenoid 235 configured to move the position of the support body 238 to adjust the reaction force applied to the lever part 210 by the support body 238. In this case, the support body 238 is moved forward or rearward, i.e., towards and away from the lever part 210, by the operation of the solenoid 235. When the support body 238 moves forward or towards the lever part 210, the support body 238 presses the pressing part 212 of the lever part 210 or applies a reaction force to the pressing part 212 in a direction opposite to the first rotation direction in which the lever part 210 rotates to generate the braking force. Further, the spring 237 provides an elastic force which the support body 238 applies as a reaction force to the lever part 210.

In addition, a reaction force adjustment part accommodation hole 253 may be formed in the main body part 250. Further, the solenoid 235 of the reaction force adjustment part 230 may be disposed in the reaction force adjustment part accommodation hole 253. Further, the support body 238 of the reaction force adjustment part 230 moves forward or rearward in the direction of the lever part 210 while being moved in position by the operation of the solenoid 235 as described above. Specifically, the solenoid may move the support body 238 between a first position in which it contacts the lever part 210 and applies a reaction force to the lever part 210, as schematically shown in Fig. 5, and a second position in which the support body 238 clears or is separated from the lever part 210 and, thus, does not apply a reaction force to the lever part 210.

In addition, when the motor 300 performs the regenerative braking, the control device 700 may operate the reaction force adjustment part 230 so that the support body 238 elastically presses the lever part 210. For example, the control device 700 may output a first control signal, when the motor 300 performs regenerative braking, and the reaction force adjustment part 230 may position the support body 238 in its first position in response to receiving the first control signal so that it applies a reaction force to the lever part 210. For example, the solenoid 235 may be disconnected from electrical current in response to receiving the first control signal so that the support part 238 is position in its first position to apply a reaction force to the lever part 210. When the motor 300 does not perform the regenerative braking, the control device 700 may operate the reaction force adjustment part 230 so that the support body 238 does not elastically press the lever part 210. For example, the control device 700 may output a second control signal, when the motor 300 does not perform regenerative braking, and the reaction force adjustment part may position the support body 238 in its second position in response to receiving the second control signal so that it does not apply a reaction force to the lever part 210. To move the support part from the first to the second position, the solenoid 235, in response to the second control signal, may be supplied with electrical current.

In addition, when the battery 400 is completely charged, the control device 700 may perform control so that the motor 300 does not perform the regenerative braking.

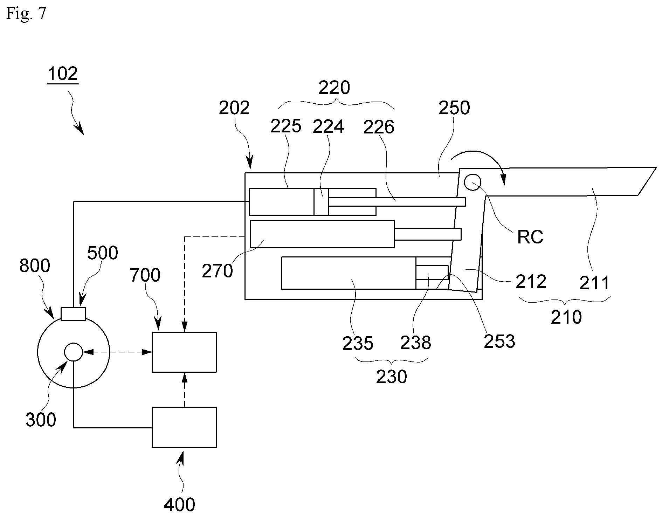

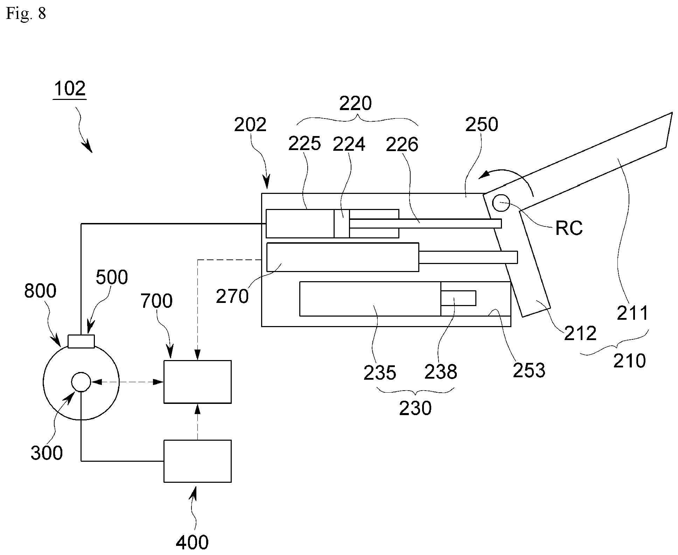

Hereinafter, with reference to FIGS. 7 and 8, an operational principle of the brake operating device 102 according to the second embodiment will be described in detail.

As illustrated in FIG. 7, when the user grips and pulls the handle part 211 of the lever part 210 to perform the braking process, the lever part 210 rotates in the first rotation direction about the rotation center RC, and the pressing part 212 of the lever part 210 presses the sensor part 270 and the piston rod 226 of the hydraulic cylinder part 220.

When the sensor part 270 detects the rotation of the lever part 210 and transmits the braking signal to the control device 700, the control device 700 controls the motor 300 to performs the regenerative braking. Further, when the regenerative braking is performed, the rotational speed of the wheel 800 decreases, and the braking force required for braking decreases to that extent.

As described above, when the motor 300 performs the regenerative braking, the support body 238 of the reaction force adjustment part 230 provides the reaction force to the lever part 210. Specifically, the support body 238 may elastically press the lever part 210 by receiving the elastic force from the spring 237. Therefore, the support body 238 may provide the reaction force to the lever part 210.

Consequently, the user rotates the lever part 210 less than the original intention because of the reaction force applied to the lever part 210 by the reaction force adjustment part 230. As the lever part 210 rotates less, the hydraulic cylinder part 220 provides the less generated braking force to the brake pad 500.

That is, the reaction force adjustment part 230 provides the reaction force to the lever part 210 and induces the user's manipulation on the lever part 210 so that the braking force, which decreases to the extent that the rotational speed of the wheel 800 is decreased by the regenerative braking of the motor 300, is provided to the brake pad 500.

Next, when the regenerative braking is not performed even though the user pulls the handle part 211 of the lever part 210 to generate the braking signal to perform the braking process, the reaction force applied to the lever part 210 by the reaction force adjustment part 230 may be eliminated.

That is, in case that the control device 700 does not control the motor 300 to perform the regenerative braking even though the control device 700 receives the braking signal from the sensor part 270 of the brake operating device 202, the reaction force adjustment part 230 may also be controlled so as not to provide the reaction force.

For example, the case in which the control device 700 controls the motor 300 to not perform the regenerative braking even though the control device 700 receives the braking signal from the sensor part 270 of the brake operating device 202 may be a case in which the battery 400 is completely charged and need not be charged any further in the current state. In this situation, the motor 300 is controlled so as not to perform the regenerative braking even though the control device 700 receives the braking signal from the sensor part 270 of the brake operating device 202.

When the motor 300 does not perform the regenerative braking as described above, the rotational speed of the wheel 800 is not decreased by the regenerative braking. Therefore, to brake the wheel 800 in response to the user's intention, a relatively higher braking force is required than in the case in which the regenerative braking is performed.

Therefore, the control device 700 controls the reaction force adjustment part 230 to eliminate the reaction force applied to the lever part 210, such that even though the user pulls the lever part 210 with the same force, a higher braking force may be provided to the brake pad 500 than in the case in which the regenerative braking is performed.

Meanwhile, unlike the second embodiment of the present invention, if the same braking force is always applied to the brake pad 500 when the user pulls the lever part 210 with the same force regardless of whether to perform the regenerative braking, there occurs a difference in the operation of braking the bicycle 102 actually performed depending on whether to perform the regenerative braking, such that the user feels disharmony at the time of manipulating the brake operating device 202 to perform the braking process.

As described above, to prevent the user from feeling disharmony at the time of manipulating the brake operating device 202 to perform the braking process, the control device 700 of the second embodiment of the present invention may control the reaction force adjustment part 230 to adjust the reaction force provided to the lever part 210.

That is, in case that the motor 300 does not perform the regenerative braking, the control device 700 may control the reaction force adjustment part 230 to eliminate or reduce the reaction force applied to the lever part 210.

On the contrary, in case that the motor 300 performs the regenerative braking, the control device 700 may control the reaction force adjustment part 230 to provide the reaction force to the lever part 210.

As described above, when the reaction force applied to the lever part 210 is eliminated or reduced in accordance with whether the motor 300 performs the regenerative braking, it is possible to minimize disharmony felt by the user in accordance with whether to perform the regenerative braking when the user manipulates the lever part 210 of the brake operating device 202.

Next, as illustrated in FIG. 8, when the user does not pull the lever part 210 of the brake operating device 202 any further, i.e., when the braking of the bicycle is stopped, the lever part 210 returns to the original position.

With the above-mentioned configuration, the brake operating device 202 according to the second embodiment may also minimize disharmony felt by the user during the braking process.

In particular, according to the second embodiment, the configuration of the brake operating device 202 may be further simplified.

In addition, the bicycle 102 having the brake operating device 202 according to the second embodiment of the present invention may minimize disharmony felt by the user when the user manipulates the brake operating device 202 in response to whether to perform the regenerative braking.

## Claims

1. A brake operating device (201) for a bicycle (101) having a motor (300) for operating a wheel (800) or performing regenerative braking, the brake operating device (201) comprising:
a main body part (250) configured for being mounted on a handle;
a lever part (210) rotatably coupled to the main body part (250);
a hydraulic cylinder part (220) embedded in the main body part (250) and configured to generate a braking force to be provided to a brake pad (500) when the lever part (210) is rotated;
a sensor part (270) configured to detect a position of the lever part (210); and
a reaction force adjustment part (230) configured to adjust a reaction force applied to the lever part (210) in a direction opposite to a first rotation direction of the lever part (210) when the lever part (210) is rotated in the first rotation direction to increase the braking force,
a reaction force elastic part (280) configured to provide the reaction force to the lever part (210) in the direction opposite to the first rotation direction of the lever part (210) when the lever part (210) is rotated in the first rotation direction,
**characterized in that**
the reaction force adjustment part (230) is coupled to the main body part (250) and configured to adjust the reaction force provided to the lever part (210) by the reaction force elastic part (280), and
wherein the reaction force adjustment part (230) comprises:
a support body (238) movable between a first position, in which it supports an end of the reaction force elastic part (280), and a second position, in which it clears the end of the reaction force elastic part (280); and
a solenoid (235) configured to move the support body (238) between the first position and the second position.

2. The brake operating device (201) of claim 1, wherein the main body part (250) has a reaction force elastic part accommodation hole (258) accommodating the reaction force elastic part (280), wherein the solenoid (235) of the reaction force adjustment part (230) is coupled to the main body part (250), and the support body (238) of the reaction force adjustment part (230), in the first position, is inserted into the reaction force elastic part accommodation hole (258), and, in the second position, is separated from the reaction force elastic part accommodation hole (258).

3. The brake operating device (201) of claim 1 or 2, wherein the reaction force elastic part (280) provides the reaction force to the lever part (210) when the support body (238) of the reaction force adjustment part (230) is positioned in the first position and supports the end of the reaction force elastic part (280).

4. The brake operating device (201) of claim 3, wherein the reaction force adjustment part (230) is configured to position the support body (238) in its first position to support the end of the reaction force elastic part (280) in response to receiving a first control signal indicating that the motor (300) performs the regenerative braking, and
wherein the reaction force adjustment part (230) is configured to position the support body (238) in its second position so that the support body (238) does not support the end of the reaction force elastic part (280) in response to receiving a second control signal indicating that the motor (300) does not perform the regenerative braking.

5. A brake operating device (202) for a bicycle (102) having a motor (300) for operating a wheel (800) or performing regenerative braking, the brake operating device (202) comprising:
a main body part (250) configured for being mounted on a handle;
a lever part (210) rotatably coupled to the main body part (250);
a hydraulic cylinder part (220) embedded in the main body part (250) and configured to generate a braking force to be provided to a brake pad (500) when the lever part (210) is rotated;
a sensor part (270) configured to detect a position of the lever part (210); and
a reaction force adjustment part (230) configured to adjust a reaction force applied to the lever part (210) in a direction opposite to a first rotation direction of the lever part (210) when the lever part (210) is rotated in the first rotation direction to increase the braking force,
**characterized in that**
the reaction force adjustment part (230) comprises:
a support body (238) movable between a first position, in which it applies a reaction force to the lever part (210), and a second position, in which it clears the lever part (210);
a spring (237) configured to elastically tension the support body (238) in a direction of the lever part (210); and
a solenoid (235) configured to move the support body (238) between its first position and its second position, and adjust the reaction force applied to the lever part (210) by the support body (238).

6. The brake operating device (202) of claim 5, wherein a reaction force adjustment part accommodation hole (253) is formed in the main body part (250), wherein the solenoid (235) of the reaction force adjustment part (230) is disposed in the reaction force adjustment part accommodation hole (253) and is configured to move the support body (238) of the reaction force adjustment part (230) towards and away from the lever part (210).

7. The brake operating device (202) of claim 5 or 6, wherein the reaction force adjustment part (230) is configured to position the support body (238) in its first position so that it applies a reaction force to the lever part (210) in response to receiving a first control signal indicating that the motor (300) performs the regenerative braking, and
wherein the reaction force adjustment part (230) is configured to position the support body (238) in its second position so that it does not apply a reaction force to the lever part (210) in response to receiving a second control signal indicating that the motor (300) does not perform the regenerative braking.

8. The brake operating device (201, 202) of any one of the preceding claims, wherein the sensor part (270) is a linear sensor, and the sensor part (270) is embedded in the main body part (250) and disposed in a longitudinal direction of the hydraulic cylinder part (220).

9. A bicycle (101, 102) comprising:
a wheel (800);
a motor (300) configured to selectively operate the wheel (800) and perform regenerative braking on the wheel (800);
a battery (400) configured to selectively supply stored electrical energy to operate the motor (300) and store electrical energy received from the motor (300) during the regenerative braking;
a brake pad (500) configured to brake the wheel (800);
a brake operating device (201, 202) in accordance with any one of the preceding claims to provide a braking force to the brake pad (500) in accordance with a user's manipulation; and
a control device (700) which is in signal communication with the brake operating device (201) and which is configured to adjust the braking force provided to the brake pad (500) by the brake operating device (203) on the basis of an operating state of the motor (300) and a state of charge of the battery (400).

10. The bicycle (101, 102) of claim 9, wherein the main body part (250) of the brake operating device (201) is mounted on a handle of the bicycle.

11. The bicycle (101) of claim 9 or 10, wherein the brake operating device (201) is formed in accordance with claim 4, wherein the control device (700) is configured to output the first control signal to the reaction force adjustment part (230) when the motor (300) performs the regenerative braking,
wherein the control device (700) is configured to output the second control signal to the reaction force adjustment part (230) when the motor (300) does not perform the regenerative braking.

12. The bicycle (102) of claim 9 or 10, wherein brake operating device (202) is formed in accordance with claim 7, wherein the control device (700) is configured to output the first control signal to the reaction force adjustment part (230) when the motor (300) performs the regenerative braking, and
wherein the control device (700) is configured to output the second control signal to the reaction force adjustment part (230) when the motor (300) does not perform the regenerative braking.

13. The bicycle (101, 102) of claim 11 or 12, wherein the control device (700) is configured to perform control so that the motor (300) does not perform the regenerative braking when the battery (400) is completely charged.

## Patentansprüche

1. Bremsenbetriebseinrichtung (201) für ein Fahrrad (101) mit einem Motor (300) zum Betreiben eines Rads (800) oder Durchführen eines regenerativen Bremsvorgangs, wobei die Bremsenbetriebseinrichtung (201) umfasst:
ein Hauptkörperteil (250), das konfiguriert ist, um an einem Griff montiert zu werden;
ein Hebelteil (210), das drehbar mit dem Hauptkörperteil (250) gekoppelt ist;
ein Hydraulikzylinderteil (220), das in dem Hauptkörperteil (250) eingebettet ist und konfiguriert ist, um eine Bremskraft zu erzeugen, die an einem Bremsklotz (500) bereitgestellt werden soll, wenn das Hebelteil (210) gedreht wird;
ein Sensorteil (270), das konfiguriert ist, um eine Position des Hebelteils (210) zu detektieren; und
ein Reaktionskrafteinstellteil (230), das konfiguriert ist, um eine Reaktionskraft einzustellen, die auf das Hebelteil (210) in einer Richtung entgegengesetzt zu einer ersten Drehrichtung des Hebelteils (210) ausgeübt wird, wenn das Hebelteil (210) in der ersten Drehrichtung gedreht wird, um die Bremskraft zu erhöhen,
ein Reaktionskraftelastikteil (280), das konfiguriert ist, um die Reaktionskraft an dem Hebelteil (210) in der Richtung entgegengesetzt zu der ersten Drehrichtung des Hebelteils (210) bereitzustellen, wenn das Hebelteil (210) in der ersten Drehrichtung gedreht wird,
**dadurch gekennzeichnet, dass**
das Reaktionskrafteinstellteil (230) mit dem Hauptkörperteil (250) gekoppelt ist und konfiguriert ist, um die Reaktionskraft, die an dem Hebelteil (210) durch das Reaktionskraftelastikteil (280) bereitgestellt wird, einzustellen, und
wobei das Reaktionskrafteinstellteil (230) umfasst:
einen Stützkörper (238), der zwischen einer ersten Position, in der er ein Ende des Reaktionskraftelastikteils (280) stützt, und einer zweiten Position, in der er das Ende des Reaktionskraftelastikteils (280) freigibt, bewegbar ist; und
ein Solenoid (235), das konfiguriert ist, um den Stützkörper (238) zwischen der ersten Position und der zweiten Position zu bewegen.

2. Bremsenbetriebseinrichtung (201) nach Anspruch 1, wobei das Hauptkörperteil (250) ein Reaktionskraftelastikteilaufnahmeloch (258) aufweist, das das Reaktionskraftelastikteil (280) aufnimmt, wobei das Solenoid (235) des Reaktionskrafteinstellteils (230) mit dem Hauptkörperteil (250) gekoppelt ist und der Stützkörper (238) des Reaktionskrafteinstellteils (230) in der ersten Position in das Reaktionskraftelastikteilaufnahmeloch (258) eingesetzt ist und in der zweiten Position von dem Reaktionskraftelastikteilaufnahmeloch (258) getrennt ist.

3. Bremsenbetriebseinrichtung (201) nach Anspruch 1 oder 2, wobei das Reaktionskraftelastikteil (280) die Reaktionskraft an dem Hebelteil (210) bereitstellt, wenn der Stützkörper (238) des Reaktionskrafteinstellteils (230) in der ersten Position positioniert ist und das Ende des Reaktionskraftelastikteils (280) stützt.

4. Bremsenbetriebseinrichtung (201) nach Anspruch 3, wobei das Reaktionskrafteinstellteil (230) konfiguriert ist, um den Stützkörper (238) in Reaktion auf den Empfang eines ersten Steuersignals, das angibt, dass der Motor (300) den regenerativen Bremsvorgang durchführt, in seiner ersten Position zu positionieren, um das Ende des Reaktionskraftelastikteils (280) zu stützen, und
wobei das Reaktionskrafteinstellteil (230) konfiguriert ist, um den Stützkörper (238) in Reaktion auf den Empfang eines zweiten Steuersignals, das angibt, dass der Motor (300) den regenerativen Bremsvorgang nicht durchführt, in seiner zweiten Position zu positionieren, so dass der Stützkörper (238) das Ende des Reaktionskraftelastikteils (280) nicht stützt.

5. Bremsenbetriebseinrichtung (202) für ein Fahrrad (102) mit einem Motor (300) zum Betreiben eines Rads (800) oder Durchführen eines regenerativen Bremsvorgangs, wobei die Bremsenbetriebseinrichtung (202) umfasst:
ein Hauptkörperteil (250), das konfiguriert ist, um an einem Griff montiert zu werden;
ein Hebelteil (210), das drehbar mit dem Hauptkörperteil (250) gekoppelt ist;
ein Hydraulikzylinderteil (220), das in dem Hauptkörperteil (250) eingebettet ist und konfiguriert ist, um eine Bremskraft zu erzeugen, die an einem Bremsklotz (500) bereitgestellt werden soll, wenn das Hebelteil (210) gedreht wird;
ein Sensorteil (270), das konfiguriert ist, um eine Position des Hebelteils (210) zu detektieren; und
ein Reaktionskrafteinstellteil (230), das konfiguriert ist, um eine Reaktionskraft einzustellen, die auf das Hebelteil (210) in einer Richtung entgegengesetzt zu einer ersten Drehrichtung des Hebelteils (210) ausgeübt wird, wenn das Hebelteil (210) in der ersten Drehrichtung gedreht wird, um die Bremskraft zu erhöhen,
**dadurch gekennzeichnet, dass** das Reaktionskrafteinstellteil (230) umfasst:
einen Stützkörper (238), der zwischen einer ersten Position, in der er eine Reaktionskraft auf das Hebelteil (210) ausübt, und einer zweiten Position, in der er das Hebelteil (210) freigibt, bewegbar ist;
eine Feder (237), die konfiguriert ist, um den Stützkörper (238) in einer Richtung des Hebelteils (210) elastisch zu spannen; und
ein Solenoid (235), das konfiguriert ist, um den Stützkörper (238) zwischen seiner ersten Position und seiner zweiten Position zu bewegen und die Reaktionskraft, die auf das Hebelteil (210) durch den Stützkörper (238) ausgeübt wird, einzustellen.

6. Bremsenbetriebseinrichtung (202) nach Anspruch 5, wobei ein Reaktionskrafteinstellteilaufnahmeloch (253) in dem Hauptkörperteil (250) ausgebildet ist, wobei das Solenoid (235) des Reaktionskrafteinstellteils (230) in dem Reaktionskrafteinstellteilaufnahmeloch (253) angeordnet ist und konfiguriert ist, um den Stützkörper (238) des Reaktionskrafteinstellteils (230) zu dem Hebelteil (210) hin und von diesem weg zu bewegen.

7. Bremsenbetriebseinrichtung (202) nach Anspruch 5 oder 6, wobei das Reaktionskrafteinstellteil (230) konfiguriert ist, um den Stützkörper (238) in Reaktion auf den Empfang eines ersten Steuersignals, das angibt, dass der Motor (300) den regenerativen Bremsvorgang durchführt, in seiner ersten Position zu positionieren, so dass er eine Reaktionskraft auf das Hebelteil (210) ausübt, und
wobei das Reaktionskrafteinstellteil (230) konfiguriert ist, um den Stützkörper (238) in Reaktion auf den Empfang eines zweiten Steuersignals, das angibt, dass der Motor (300) den regenerativen Bremsvorgang nicht durchführt, in seiner zweiten Position zu positionieren, so dass er keine Reaktionskraft auf das Hebelteil (210) ausübt.

8. Bremsenbetriebseinrichtung (201, 202) nach einem der vorhergehenden Ansprüche, wobei das Sensorteil (270) ein Linearsensor ist und das Sensorteil (270) in dem Hauptkörperteil (250) eingebettet ist und in einer Längsrichtung des Hydraulikzylinderteils (220) angeordnet ist.

9. Fahrrad (101, 102), umfassend:
ein Rad (800);
einen Motor (300), der konfiguriert ist, um das Rad (800) selektiv zu betreiben und einen regenerativen Bremsvorgang an dem Rad (800) durchzuführen;
eine Batterie (400), die konfiguriert ist, um gespeicherte elektrische Energie selektiv zuzuführen, um den Motor (300) zu betreiben und elektrische Energie zu speichern, die von dem Motor (300) während des regenerativen Bremsvorgangs empfangen wird;
einen Bremsklotz (500), der konfiguriert ist, um das Rad (800) zu bremsen;
eine Bremsenbetriebseinrichtung (201, 202) nach einem der vorhergehenden Ansprüche, um eine Bremskraft an dem Bremsklotz (500) in Übereinstimmung mit einer Betätigung eines Benutzers bereitzustellen; und
eine Steuereinrichtung (700), die in Signalkommunikation mit der Bremsenbetriebseinrichtung (201) steht und die konfiguriert ist, um die Bremskraft, die an dem Bremsklotz (500) durch die Bremsenbetriebseinrichtung (203) bereitgestellt wird, auf der Grundlage eines Betriebszustands des Motors (300) und eines Ladezustands der Batterie (400) einzustellen.

10. Fahrrad (101, 102) nach Anspruch 9, wobei das Hauptkörperteil (250) der Bremsenbetriebseinrichtung (201) an einem Griff des Fahrrads montiert ist.

11. Fahrrad (101) nach Anspruch 9 oder 10, wobei die Bremsenbetriebseinrichtung (201) nach Anspruch 4 ausgebildet ist, wobei die Steuereinrichtung (700) konfiguriert ist, um das erste Steuersignal an das Reaktionskrafteinstellteil (230) auszugeben, wenn der Motor (300) den regenerativen Bremsvorgang durchführt,
wobei die Steuereinrichtung (700) konfiguriert ist, um das zweite Steuersignal an das Reaktionskrafteinstellteil (230) auszugeben, wenn der Motor (300) den regenerativen Bremsvorgang nicht durchführt.

12. Fahrrad (102) nach Anspruch 9 oder 10, wobei die Bremsenbetriebseinrichtung (202) nach Anspruch 7 ausgebildet ist, wobei die Steuereinrichtung (700) konfiguriert ist, um das erste Steuersignal an das Reaktionskrafteinstellteil (230) auszugeben, wenn der Motor (300) den regenerativen Bremsvorgang durchführt, und
wobei die Steuereinrichtung (700) konfiguriert ist, um das zweite Steuersignal an das Reaktionskrafteinstellteil (230) auszugeben, wenn der Motor (300) den regenerativen Bremsvorgang nicht durchführt.

13. Fahrrad (101, 102) nach Anspruch 11 oder 12, wobei die Steuereinrichtung (700) konfiguriert ist, um eine Steuerung durchzuführen, so dass der Motor (300) den regenerativen Bremsvorgang nicht durchführt, wenn die Batterie (400) vollständig geladen ist.

## Revendications

1. Dispositif d'actionnement de frein (201) pour une bicyclette (101) ayant un moteur (300) pour la commande d'une roue (800) ou l'exécution d'un freinage régénératif, ledit dispositif d'actionnement de frein (201) comprenant :
une partie de corps principal (250) prévue pour être montée sur une poignée ;
une partie de levier (210) raccordée de manière pivotante à la partie de corps principal (250) ;
une partie de cylindre hydraulique (220) intégrée à la partie de corps principal (250) et prévue pour générer une force de freinage à appliquer à une plaquette de frein (500) lorsque la partie de levier (210) est pivotée ;
une partie de capteur (270) prévue pour détecter une position de la partie de levier (210) ; et
une partie de réglage de force de réaction (230) prévue pour régler une force de réaction appliquée à la partie de levier (210) dans un sens opposé à un premier sens de pivotement de la partie de levier (210) lorsque la partie de levier (210) est pivotée dans le premier sens de pivotement pour accroître la force de freinage,
une partie élastique à force de réaction (280) prévue pour appliquer la force de réaction à la partie de levier (210) dans le sens opposé au premier sens de pivotement de la partie de levier (210) lorsque la partie de levier (210) est pivotée dans le premier sens de pivotement, **caractérisé en ce que**
la partie de réglage de force de réaction (230) est raccordée à la partie de corps principal (250) et prévue pour régler la force de réaction appliquée à la partie de levier (210) par la partie élastique à force de réaction (280), et
où la partie de réglage de force de réaction (230) comprend :
un corps de support (238) déplaçable entre une première position, où il supporte une extrémité de la partie élastique à force de réaction (280), et une deuxième position, où il libère l'extrémité de la partie élastique à force de réaction (280) ; et
un solénoïde (235) prévu pour déplacer le corps de support (238) entre la première position et la deuxième position.

2. Dispositif d'actionnement de frein (201) selon la revendication 1, où la partie de corps principal (250) a un trou de réception de partie élastique à force de réaction (258) où est logée la partie élastique à force de réaction (280), où le solénoïde (235) de la partie de réglage de force de réaction (230) est raccordé à la partie de corps principal (250), et le corps de support (238) de la partie de réglage de force de réaction (230), dans la première position, est inséré dans le trou de réception de partie élastique à force de réaction (258), et, dans la deuxième position, est séparé du trou de réception de partie élastique à force de réaction (258).

3. Dispositif d'actionnement de frein (201) selon la revendication 1 ou la revendication 2, où la partie élastique à force de réaction (280) applique la force de réaction à la partie de levier (210) lorsque le corps de support (238) de la partie de réglage de force de réaction (230) est positionné dans la première position et supporte l'extrémité de la partie élastique à force de réaction (280).

4. Dispositif d'actionnement de frein (201) selon la revendication 3, où la partie de réglage de force de réaction (230) est prévue pour positionner le corps de support (238) dans sa première position afin de supporter l'extrémité de la partie élastique à force de réaction (280), en réaction à la réception d'un premier signal de commande indiquant que le moteur (300) exécute le freinage régénératif, et
la partie de réglage de force de réaction (230) est prévue pour positionner le corps de support (238) dans sa deuxième position de sorte que le corps de support (238) ne supporte pas l'extrémité de la partie élastique à force de réaction (280), en réaction à la réception d'un deuxième signal de commande indiquant que le moteur (300) n'exécute pas le freinage régénératif.

5. Dispositif d'actionnement de frein (202) pour une bicyclette (102) ayant un moteur (300) pour la commande d'une roue (800) ou l'exécution d'un freinage régénératif, ledit dispositif d'actionnement de frein (202) comprenant :
une partie de corps principal (250) prévue pour être montée sur une poignée ;
une partie de levier (210) raccordée de manière pivotante à la partie de corps principal (250) ;
une partie de cylindre hydraulique (220) intégrée à la partie de corps principal (250) et prévue pour générer une force de freinage à appliquer à une plaquette de frein (500) lorsque la partie de levier (210) est pivotée ;
une partie de capteur (270) prévue pour détecter une position de la partie de levier (210) ; et
une partie de réglage de force de réaction (230) prévue pour régler une force de réaction appliquée à la partie de levier (210) dans un sens opposé à un premier sens de pivotement de la partie de levier (210) lorsque la partie de levier (210) est pivotée dans le premier sens de pivotement pour accroître la force de freinage,
**caractérisé en ce que**
la partie de réglage de force de réaction (230) comprend :
un corps de support (238) déplaçable entre une première position, où il applique une force de réaction à la partie de levier (210), et une deuxième position, où il libère la partie de levier (210) ;
un ressort (237) prévu pour une traction élastique du corps de support (238) dans un sens de la partie de levier (210) ; et
un solénoïde (235) prévu pour déplacer le corps de support (238) entre sa première position et sa deuxième position, et régler la force de réaction appliquée à la partie de levier (210) par le corps de support (238).

6. Dispositif d'actionnement de frein (202) selon la revendication 5, où un trou de réception de partie de réglage de force de réaction (253) est formé dans la partie de corps principal (250), où le solénoïde (235) de la partie de réglage de force de réaction (230) est disposé dans le trou de réception de partie de réglage de force de réaction (253) et est prévu pour rapprocher de la partie de levier (210) le corps de support (238) de la partie de réglage de force de réaction (230), et l'éloigner de celle-ci.

7. Dispositif d'actionnement de frein (202) selon la revendication 5 ou la revendication 6, où la partie de réglage de force de réaction (230) est prévue pour positionner le corps de support (238) dans sa première position de manière à appliquer une force de réaction à la partie de levier (210), en réaction à la réception d'un premier signal de commande indiquant que le moteur (300) exécute le freinage régénératif, et
la partie de réglage de force de réaction (230) est prévue pour positionner le corps de support (238) dans sa deuxième position de sorte qu'il n'applique pas une force de réaction à la partie de levier (210), en réaction à la réception d'un deuxième signal de commande indiquant que le moteur (300) n'exécute pas le freinage régénératif.

8. Dispositif d'actionnement de frein (201,202) selon l'une des revendications précédentes, où la partie de capteur (270) est un capteur linéaire, et la partie de capteur (270) est intégrée à la partie de corps principal (250) et disposée dans le sens de la longueur de la partie de cylindre hydraulique (220).

9. Bicyclette (101, 102), comprenant :
une roue (800) ;
un moteur (300) prévu pour commander sélectivement la roue (800) et exécuter un freinage régénératif sur la roue (800) ;
une batterie (400) prévue pour fournir sélectivement de l'énergie électrique stockée pour commander le moteur (300), et stocker l'énergie électrique reçue du moteur (300) pendant le freinage régénératif ;
une plaquette de frein (500) prévue pour freiner la roue (800) ;
un dispositif d'actionnement de frein (201, 202) selon l'une des revendications précédentes pour appliquer une force de freinage à la plaquette de frein (500) en fonction d'une manœuvre d'utilisateur ; et
un dispositif de commande (700) en communication de signal avec le dispositif d'actionnement de frein (201), et prévu pour ajuster la force de freinage appliquée à la plaquette de frein (500) par le dispositif d'actionnement de frein (203) sur la base d'un état de fonctionnement du moteur (300) et d'un état de charge de la batterie (400).

10. Bicyclette (101, 102) selon la revendication 9, où la partie de corps principal (250) du dispositif d'actionnement de frein (201) est montée sur une poignée de la bicyclette.

11. Bicyclette (101) selon la revendication 9 ou la revendication 10, où le dispositif d'actionnement de frein (201) est prévu selon la revendication 4, où le dispositif de commande (700) est prévu pour transmettre le premier signal de commande à la partie de réglage de force de réaction (230) lorsque le moteur (300) exécute le freinage régénératif, où le dispositif de commande (700) est prévu pour transmettre le deuxième signal de commande à la partie d'ajustement de force de réaction (230) lorsque le moteur (300) n'exécute pas le freinage régénératif.

12. Bicyclette (102) selon la revendication 9 ou la revendication 10, où le dispositif d'actionnement de frein (202) est prévu selon la revendication 7, où le dispositif de commande (700) est prévu pour transmettre le premier signal de commande à la partie de réglage de force de réaction (230) lorsque le moteur (300) exécute le freinage régénératif, et où le dispositif de commande (700) est prévu pour transmettre le deuxième signal de commande à la partie d'ajustement de force de réaction (230) lorsque le moteur (300) n'exécute pas le freinage régénératif.

13. Bicyclette (101, 102) selon la revendication 11 ou la revendication 12, où le dispositif de commande (700) est prévu pour exécuter une commande de sorte que le moteur (300) n'exécute pas le freinage régénératif lorsque la batterie (400) est complètement chargée.
